# EUROPEAN PATENT SPECIFICATION

(11) **EP 1 106 857 B1**
(45) Date of publication and mention of the grant of the patent: **30.05.2007**
(21) Application number: 00125961.3
(22) Date of filing: 28.11.2000
(51) Int. Cl.: F16D 23/06

(54) **Synchronizer**
Synchronisiereinrichtung
Synchroniseur

(30) Priority: 08.12.1999 GB 9928892
(43) Date of publication of application: 13.06.2001
(73) Proprietor: Eaton Corporation, Cleveland, Ohio 44114-2584 (US)
(72) Inventor: Smith, Carl Christopher John, Euxton, Chroley, Lancashire PR7 6HU (GB); Jackson, Graeme Andrew, Bolton, Lancashire BL2 1EX (GB)
(74) Representative: Rüger, Barthelt & Abel Patentanwälte

(56) References cited:
- DE-A- 19 733 519
- FR-A- 2 686 669
- US-A- 4 727 968

## Description

### Field of the Invention

This invention relates to a synchronizer having means to limit synchronizing force.

### Background of the Invention

Synchronizers for use in multi-ratio transmissions are well known. Such synchronizers include pairs of friction and jaw members for respectively synchronizing and positive clutching a gear to a shaft, pre-energizer assemblies for engaging the friction members in response to initial engaging movement of a shift sleeve, a hub rotatably fixed to the shaft and having external spline teeth slidably receiving internal spline teeth of the shift sleeve which often defines one of the jaw member pairs, blockers for arresting engaging movement of the shift sleeve until synchronization is reached and for transferring a shift force from the sleeve to increase the engaging force of the friction members.

### Summary of the Invention

An object of this invention is to provide a synchronizer with means to prevent excessive pressure on friction surfaces therein.

According to a feature of the invention, a synchronizer for frictionally synchronizing and positive connecting first and second drives is disposed for relative rotation about a common axis. The synchronizer comprising first jaw means axially movable from a neutral position into an engaged position with second jaw means for positive connecting the drives in response to engaging movement of the first jaw means by an axially directed first shift force. A first friction member is axially movable into frictional engagement with a second friction member in response to the engaging movement of the first jaw means for producing a first synchronizing torque. First and second blocker means prevent asynchronous engagement of the jaw means and transmit the shift force to the first and second friction members.

The improvement is characterized by first limit means producing a first counter force for decreasing the amount of the first shift force transmitted to the first and second friction members in response to the synchronizing torque exceeding a first predetermined amount.

### Brief Description of the Drawings

The synchronizer mechanism of the invention is shown in the accompanying drawings in which:
Figure 1 is a sectional view of a double-acting synchronizer mechanism in a neutral position;
Figure 2 is a schematic view looking radially inward along line 2-2 in Figure 1 with components therein in the neutral position; and
Figure 3 is a schematic view, as is in Figure 2, with components therein in synchronizing mode of operation.

### Detailed Description of the Drawings

The term "synchronizer" shall designate a clutch mechanism utilized to non-rotatably couple a selected ratio gear to a shaft by means of a positive clutch in which attempted engagement of the positive clutch is prevented until members of the positive clutch are brought to substantially synchronous rotation by a synchronizing friction clutch associated with the positive clutch.

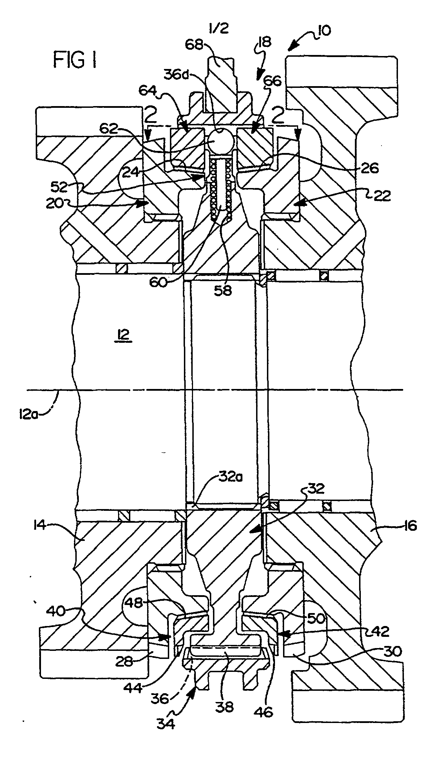

Looking now at Figures 1-3, therein is shown a gear and synchronizer 10 including a shaft or drive 12 mounted for rotation about a central axis 12a, axially spaced apart gears or drive supported on the shaft for rotation relative thereto and secured against axial movement relative to the shaft in known manner, and a double-acting synchronizer clutch mechanism 18.

The synchronizer clutch mechanism 18 includes annular members 20,22 axially and rotatably affixed to gears or drives 14,16 in known manner, friction surfaces 24,26 defining gear friction members herein integral with members 20,22, jaw teeth 28,30 defining gear jaw members herein integral with members 20,22, a hub member 32 axially and rotatably affixed at a central opening 32a thereof to shaft 12, a shift sleeve 34, internal spline teeth 36 on a central opening of sleeve 34 and in constant mesh with external spline teeth 38 defined on the outer circumference of hub 32, baulkrings 40,42, blocker teeth 44,46 and friction surfaces 48,50 herein integral with baulkrings 40,42, a plurality of pre-energizer assemblies 52 (herein three with one shown), and a plurality of pairs of upshift and downshift force limiting assemblies 54,56 (herein three with one shown) to limit the engagement force of the friction surfaces.

As is readily seen, friction surfaces 24,48 and 26,50 pair up to define friction clutches for synchronizing the gears to the shaft prior to engagement of the jaw clutch members. Cone clutches are preferred; however, other types of friction clutches may be used. A wide range of cone angles may be used. The friction surfaces may be defined by any of several known friction materials affixed to the base member, e.g., pyrolytic carbon friction materials such as disclosed in U.S. Patents 4,700,823; 4,844,218 and 4,778,548 may be used.

Opposite ends of shift sleeve spline teeth 36 include angled blocker surfaces 36a,36b which cooperate with mating angled blocker surfaces 44a,46a of baulkring teeth 44,46 for preventing asynchronous engagement of the jaw clutches, for transmitting shift forces to the cone clutch friction surfaces to effect an engagement force producing a synchronizing torque, and for producing a torque counter to the synchronizing torque for moving the blocker teeth out of engagement as synchronization is reached and thereby allowing spline teeth 36 defining axially movable jaw members to engage teeth 28 or 30 of the gear jaw members.

Spline teeth 36 and 38 have axially extending flank surfaces 36c,38a which continuously mate in close sliding relation so that there is relatively no free play between shift sleeve 34 and shaft 12. End portions of the flank surfaces of splines 36 and flank surfaces of gear jaw teeth 28,30 may be provided with an anti-back out or locking angle feature to prevent inadvertent disengagement of the teeth. Details of this feature may be seen by reference to U.S. Patent 4,727,968.

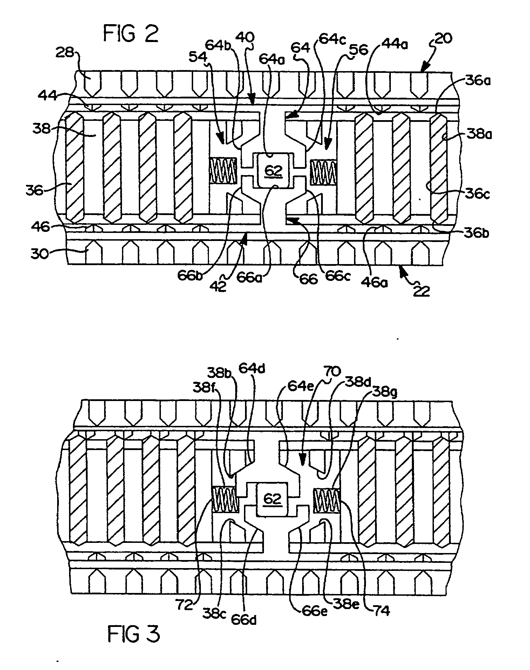

Each pre-energizer assembly 52, which is known in the art, includes a helical compression spring 58 and plunger 60 disposed in a radially extending blind bore and biasing a roller or ball 62 (herein a roller) into an annular detent groove 36d in sleeve splines 36. Pre-energizer assembly 52 resiliently positions shift sleeve 34 in the neutral position shown in Figures 1 and 2. Rollers 62 are axially spaced between abutment surfaces 64a,66a of tabs 64,66 formed integral with baulkrings 40,42. When it is desired to couple either gear to the shaft, an appropriate and unshown shift mechanism, such as disclosed in U.S. Patent 4,920,815 applies a shift force to move the shift sleeve axially via a partially shown shift fork 68 along the axis of shaft 12 either left to couple gear 14 or right to couple gear 16. The shift mechanism may be manually moved by an operator through an unshown linkage system.

The force limiting means 54,56 include recesses 70 (herein three circumferentially spaced apart recess) in the outer circumference of hub 32 and having circumferentially spaced apart ends defined by pairs of ramp surfaces 38b, 38c and 38d, 38e which respectively engage surfaces 64d,66d and 64e,66e of shoulders 64b,66b,64c,66c to limit the amount of operator shift force engaging the friction members in response to the synchronizing torque exceeding a predetermined amount. The pairs of surfaces 38b,38c and 38d,38e are respectively separated by pockets 38f, 38g respectively having preloaded springs 72,74 disposed therein and operative to yieldably contact the shoulders 64b,66b and 64c, 66c which are rigid with tabs 64a,66b and respectively with baulkrings 40,42.

Initial leftward axial movement of shift sleeve 34 by the operator shift force is transmitted by pre-energizer rollers 62 to baulkring 40 via tab abutment surfaces 64a to effect initial frictional engagement of movable cone surface 48 with gear cone surface 24. The initial engagement force of the cone surface is, of course, a function of the force of spring 58 and the angles of the walls of detent grooves 36d. The initial frictional engagement (provided an asynchronous condition exists) produces an initial cone clutch engaging force and synchronizing torque which ensures limited relative rotation between shift sleeve 34 and baulkring 40, and hence, movement of blocker teeth 44 to a position wherein the correct angled blocker surfaces of the blocker teeth engage the correct angled blocker surfaces of spline teeth 36. When the blocker surfaces are engaged, the full operator shift force on shift sleeve 34 is transmitted to friction surfaces 24,48 via angled blocker surfaces 36a,44a, whereby the cone clutch is engaged by the full force of the operator shift force to provide the corresponding synchronizer torque. Since the blocker surfaces are disposed at angles relative to the axial direction of operator shift force, they produce a counter force or unblocking torque which is counter to the synchronizing torque from the cone clutch but of lesser magnitude during asynchronous conditions. As substantial synchronism is reached, the synchronizing torque drops below the unblocking torque, whereby the blocker teeth move out of engagement to allow continued axial movement of the shift sleeve and engagement of movable jaw teeth 36 with gear jaw teeth 28. rightward movement of shift sleeve 34 to connect gear 16 to shaft 12 produces a sequences of functions substantially the same as above.

During some upshifts and/or downshifts the operator shift force may be great enough to damage the synchronizer. For example the friction surfaces of the friction members may be damaged if the shift force is excessive and/or if there are high differential speeds between the engaged friction surfaces. The force limiting means provides a force counter to operator shift force to limit the engaging force of the friction surfaces when the torque provided by the engaged friction surfaces exceeds a predetermined amount determined by the force of springs 72 and 74. Since the force limiting means operates the same for upshift and downshift of both gears, only operation of an upshift of gear 14 is described. During an upshift synchronizing mode of operation of gear 14, torque build up across the engaged friction surfaces causes shoulder 66b to act on spring 72. When the torque exceeds a predetermined amount, spring 72 is compressed enough to allow surface 64d to contact ramp surface 38b. Any further increase via torque causes the surface 64d to move down ramp surface 38b thereby moving friction surface 48 away from friction surface 24 and reducing the engaging force therebetween to a predetermined amount. When torque reduces to the predetermined amount or less, spring 72 extends and causes surface 64d to brake contact with ramp surface 38b.

A preferred embodiment of a synchronizer is disclosed. The following claims are intended to cover the inventive portions of the disclosed synchronizer.

## Claims

1. A synchronizer (18) for frictionally synchronizing and positive connecting first and second drives (12,14) disposed for relative rotation about a common axis (12a); the clutch comprising:
first jaw means (36) axially movable from a neutral position into an engaged position with second jaw means (28) for positive connecting the drives in response to engaging movement of first jaw means (36) by an axially directed first shift force;
a first friction member (48) axially movable into frictional engagement with a second friction member (24) in response to the engaging movement of the first jaw means (36) for producing a first synchronizing torque;
first and second blocker means (36a,44a) for preventing asynchronous engagement of the jaw means and for transmitting the shift force to the first and second friction members (48,24); **characterized by:**
first limit means (64d,38b) producing a first counter force for decreasing the amount of the first shift force transmitted to the first and second friction members (48,24) in response to the synchronizing torque exceeding a first predetermined amount.

2. The synchronizer of Claim 1, further including a third drive (16) disposed for rotation about the common axis (12a) and for rotation relative to the first and second drives (12,14) and axially spaced from the second drive (14);
third jaw means (36) axially movable from a neutral position into an engaged position with fourth jaw means (30) for positive connecting the drives in response to engaging movement of first jaw means (36) by an axially directed second shift force;
a third friction member (50) axially movable into frictional engagement with a fourth friction member (26) in response to the engaging movement of the third jaw means (50) for producing a second synchronizing torque;
third and fourth blocker means (36b,46a) for preventing asynchronous engagement of the third and fourth jaw means (36,30) and for transmitting the second shift force to the third and fourth friction members (50,26);
second limit means (66d,38c) producing a second counter force for decreasing the amount of the second shift force transmitted to the third and fourth friction members (50,26) in response to the second synchronizing torque exceeding a second predetermined amount.

3. The synchronizer of Claim 1 or 2, wherein:
the first limit means (64d,38d) include resilient means (72) for preventing the first counter force until the first synchronizing torque exceeds the predetermined amount.

4. The synchronizer of Claim 1, 2 or 3, wherein:
the first limit means (64d,38b) include first and second surfaces (64d,38b) operative when engaged to produce the first counter force.

5. The synchronizer of Claim 4, wherein:
the first and second surfaces (64d,38b) respectively react between the first friction member (48) and the first drive (12); and
the resilient means (72) prevent engagement of the first and second surfaces (64d,38b) until the first synchronizing torque in one direction exceeds the first predetermined amount.

6. The synchronizer of Claim 4 or 5, wherein:
a hub (32) is affixed against rotational and axial movement relative to the first drive (12) and includes an outer circumference having a plurality of external splines (38);
the first jaw means includes internal splines (36) slidably mating with the external splines;
a first baulkring (40) includes the first friction member and the second blocker means (44a);
the hub (32) further including a recess (70) having first and second circumferentially spaced apart ends (38b,38d) with at least one of the ends (38b) defining the second surface (38b); and
the first baulkring (40) includes the first surface (48) affixed thereto.

7. The synchronizer of Claim 6, wherein:
the first limit means (64d,38b) includes third and fourth surfaces (64c,38d) respectively defined by the first baulkring (40) and the second end (38d) of the recess (70) and second resilient means (74) for preventing engagement of the third and fourth (64c,38d) surfaces until the first synchronizing torque in a direction opposite the one direction exceeds the first predetermined amount.

8. The synchronizer of Claim 6 or 7, wherein:
the internal splines (36) have axially facing ends defining the first blockers (36a).

9. The synchronizer of Claim 2 through 7, wherein:
the second limit means (66d,38c) include resilient means (72) for preventing the second counter force until the second synchronizing torque in one direction exceeds the second predetermined amount.

10. The synchronizer of Claim 2 through 9, wherein:
the second limit (66d,38c) means includes fifth and sixth surfaces (66d,38c) operative when engaged to produce the second counter force.

11. The synchronizer of Claim 10, wherein:
the fifth and sixth surfaces (66d,38c) respectively react between the third friction member (50) and the first drive (12); and
the resilient means (72) prevent engagement of the fifth and sixth surfaces (66d,38c) until the second synchronizing torque exceeds the second predetermined amount.

12. The synchronizer of Claim 6 through 11, wherein:
the third jaw means (36) includes internal splines (36) slidably mating with the external splines (38);
a second baulkring (42) includes the third friction member (50) and the fourth blockers (46a);
the hub recess (70) first end defines the sixth surface (38c); and
the second baulkring (42) includes the fifth surface (66d) affixed thereto.

13. The synchronizer of Claim 12, wherein:
the second limit means (66d,38c) includes seventh and eight surfaces (66e,38e) respectively defined by the second baulkring (42) and the second end (38e) of the recess (70) and second resilient means (74) for preventing engagement of the seventh and eight surfaces (66e,38e) until the first synchronizing torque in a direction opposite the one exceeds the first predetermined amount.

14. The synchronizer of Claim 12 or 13, wherein:
the third jaw means (36) internal splines have axially facing ends defining the third blockers (36b).

## Patentansprüche

1. Synchronisiereinrichtung (18) zur reibschlüssigen Synchronisierung und formschlüssigen Verbindung eines ersten mit einem zweiten Antriebsglied (12, 14), die über einer gemeinsamen Achse (12a) relativ zueinander drehbar angeordnet sind, wobei die Synchronisiereinrichtung aufweist:
ein erstes Klauenglied (36), das von einer neutralen Stellung aus in eine mit einem zweiten Klauenglied (28) in Eingriff befindliche Stellung axial bewegbar ist, um die Antriebsglieder in Abhängigkeit von einer Einrückbewegung des ersten Klauenglieds (36) infolge einer axial gerichteten ersten Schaltkraft formschlüssig miteinander zu verbinden;
ein erstes Reibelement (48), das in Abhängigkeit von der Einrückbewegung des ersten Klauenglieds (36) in reibschlüssige Verbindung mit einem zweiten Reibelement (24) axial bewegbar ist, um ein erstes synchronisierendes Drehmoment zu erzeugen;
ein erstes und ein zweites Sperrmittel (36a, 44a) zur Verhinderung einer asynchronen Einrückung des Klauenglieds und zur Übertragung der Schaltkraft auf das erste und das zweite Reibelement (48, 24); **gekennzeichnet durch**:
eine erste Begrenzungseinrichtung (64d, 38b), die eine erste Gegenkraft zur Verringerung der Stärke der auf das erste und das zweite Reibelement (48, 24) übertragenen ersten Schaltkraft in Abhängigkeit davon erzeugt, dass das synchronisierende Drehmoment eine erste vorbestimmte Größe übersteigt.

2. Synchronisiereinrichtung nach Anspruch 1, die ferner enthält:
ein drittes Antriebsglied (16), das um die gemeinsame Achse (12a) drehbar sowie in Bezug auf das erste und das zweite Antriebsglied (12, 14) drehbar und in Axialrichtung von dem zweiten Antriebsglied (14) beabstandet angeordnet ist;
ein drittes Klauenglied (36), das von einer neutralen Stellung aus in eine mit einem vierten Klauenglied (30) in Eingriff befindliche Stellung axial bewegbar ist, um die Antriebsglieder in Abhängigkeit von einer Einrückbewegung des ersten Klauenglieds (36) infolge einer axial gerichteten zweiten Schaltkraft formschlüssig miteinander zu verbinden;
ein drittes Reibelement (50), das in Abhängigkeit von der Einrückbewegung des dritten Klauenglieds (50) in eine reibschlüssige Verbindung mit einem vierten Reibelement (26) axial bewegbar ist, um ein zweites synchronisierendes Drehmoment zu erzeugen;
ein drittes und ein viertes Sperrmittel (36b, 46a) zur Verhinderung einer asynchronen Einrückung des dritten und des vierten Klauenglieds (36, 30) und zur Übertragung der zweiten Schaltkraft auf das dritte und das vierte Reibelement (50, 26);
ein zweite Begrenzungseinrichtung (66d, 38c), die eine zweite Gegenkraft zur Verringerung der Stärke der auf das dritte und das vierte Reibelement übertragenen zweiten Schaltkraft in Abhängigkeit davon erzeugt, dass das zweite synchronisierende Drehmoment eine zweite vorbestimmte Größe übersteigt.

3. Synchronisiereinrichtung nach Anspruch 1 oder 2, wobei:
die erste Begrenzungseinrichtung (64d, 38d) elastische Mittel (72) zur Verhinderung der ersten Gegenkraft, bis das erste synchronisierende Drehmoment die vorbestimmte Größe übersteigt, enthält.

4. Synchronisiereinrichtung nach Anspruch 1, 2 oder 3, wobei:
die erste Begrenzungseinrichtung (64d, 38b) eine erste und eine zweite Fläche (64d, 38b) enthält, die im Eingriffszustand wirksam sind, um die erste Gegenkraft zu erzeugen.

5. Synchronisiereinrichtung nach Anspruch 4, wobei:
die erste und die zweite Fläche (64d, 38b) jeweils zwischen dem ersten Reibelement (48) und dem ersten Antriebsglied (12) einwirken und
die elastischen Mittel (72) ein In-Eingriff-Kommen der ersten mit der zweiten Fläche (64d, 38b) verhindern, bis das erste synchronisierende Drehmoment in einer Richtung die erste vorbestimmte Größe übersteigt.

6. Synchronisiereinrichtung nach Anspruch 4 oder 5, wobei:
eine Nabe (32) drehfest und axial unverschiebbar in Bezug auf das erste Antriebsglied (12) befestigt ist und einen Außenumfang mit mehreren Außenverzahnungszähnen (38) aufweist;
das erste Klauenglied eine Innenverzahnung (36) enthält, die verschiebbar mit der Außenverzahnung zusammenpasst;
ein erster Synchronring (40) das erste Reibelement und das zweite Sperrmittel (44a) enthält;
die Nabe (32) ferner eine Ausnehmung (70) mit einem ersten und einem in Umfangsrichtung davon beabstandeten zweiten Ende (38b, 38d) enthält, wobei wenigstens ein Ende (38b) die zweite Fläche (38b) bildet; und
der erste Synchronring (40) die an diesem fixierte erste Fläche (48) enthält.

7. Synchronisiereinrichtung nach Anspruch 6, wobei:
die erste Begrenzungseinrichtung (64d, 38b) eine dritte und eine vierte Fläche (64c, 38d), die jeweils durch den ersten Synchronring (40) und das zweite Ende (38d) der Ausnehmung (70) definiert sind, und zweite elastische Mittel (74) enthält, die dazu dienen, ein In-Eingriff-Kommen der dritten mit der vierten Fläche (64c, 38d) zu verhindern, bis das erste synchronisierende Drehmoment in einer zu der einen Richtung entgegengesetzten Richtung die erste vorbestimmte Größe übersteigt.

8. Synchronisiereinrichtung nach Anspruch 6 oder 7, wobei:
die Innenverzahnungszähne (36) axial weisende Enden aufweisen, die die ersten Sperrmittel (36a) definieren.

9. Synchronisiereinrichtung nach Anspruch 2 bis 7, wobei:
die zweite Begrenzungseinrichtung (66d, 38c) elastische Mittel zur Verhinderung der zweiten Gegenkraft, bis das zweite synchronisierende Drehmoment in einer Richtung die zweite vorbestimmte Größe übersteigt, enthält.

10. Synchronisiereinrichtung nach Anspruch 2 bis 9, wobei:
die zweite Begrenzungseinrichtung (66d, 38c) eine fünfte und eine sechste Fläche (66d, 38c) enthält, die im Eingriffszustand wirksam sind, um die zweite Gegenkraft zu erzeugen.

11. Synchronisiereinrichtung nach Anspruch 10, wobei:
die fünfte und die sechste Fläche (66d, 38c) jeweils zwischen dem dritten Reibelement (50) und dem ersten Antrieb (12) wirksam sind; und
die elastischen Mittel (72) ein In-Eingriff-Kommen der fünften mit der sechsten Fläche verhindern, bis das zweite synchronisierende Drehmoment die zweite vorbestimmte Größe übersteigt.

12. Synchronisiereinrichtung nach Anspruch 6 bis 11, wobei:
das dritte Klauenglied (36) Innenverzahnungszähne (36) enthält, die mit den Außenverzahnungszähnen (38) verschiebbar zusammenpassen;
ein zweiter Synchronring (42) das dritte Reibelement (50) und das vierte Sperrmittel (46a) enthält;
ein erstes Ende der Ausnehmung (70) der Nabe die sechste Fläche (38c) definiert; und
der zweite Synchronring (42) die an diesem fixierte fünfte Fläche (66d) enthält.

13. Synchronisiereinrichtung nach Anspruch 12, wobei:
die zweite Begrenzungseinrichtung (66d, 38c) eine siebte und eine achte Fläche (66e, 38e), die jeweils durch den zweiten Synchronring (42) und das zweite Ende (38e) der Ausnehmung (70) gebildet sind, und zweite elastische Mittel (74) enthält, die dazu dienen, ein In-Eingriff-Kommen der siebten mit der achten Fläche (66e, 38e) zu verhindern, bis das erste synchronisierende Drehmoment in einer zu der einen Richtung entgegengesetzten Richtung die erste vorbestimmte Größe übersteigt.

14. Synchronisiereinrichtung nach Anspruch 12 oder 13, wobei:
die Innenverzahnungen des dritten Klauenglieds (36) axial weisende Enden aufweisen, die das dritte Sperrmittel (36b) definieren.

## Revendications

1. Synchroniseur (18) pour une synchronisation par frottement et un raccordement positif de premier et second entraînements (12, 14) disposés pour une rotation relative autour d'un axe commun (12a) ; l'embrayage comprenant:
un premier moyen à mâchoires (36) étant mobile de manière axiale depuis une position neutre jusqu'à une position de mise en prise avec un second moyen à mâchoires (28) pour un raccordement positif des entraînements en réponse à un mouvement de mise en prise du premier moyen à mâchoires (36) par une première force de déplacement dirigée axialement ;
un premier organe de frottement (48) étant axialement mobile, en prise par frottement avec un second organe de frottement (24) en réponse au mouvement de mise en prise du premier moyen à mâchoires (36) pour produire un premier couple de synchronisation;
des premier et second moyens de blocage (36a, 44a) pour empêcher une mise en prise asynchrone du moyen à mâchoires et pour transmettre la force de déplacement aux premier et second organes de frottement (48, 24) ; **caractérisé par** :
un premier moyen de limitation (64d, 38b) produisant une première force antagoniste pour diminuer la quantité de la première force de déplacement transmise aux premier et second organes de frottement (48, 24) en réponse au couple de synchronisation dépassant une première quantité prédéterminée.

2. Synchroniseur selon la revendication 1, incluant, en outre, un troisième entraînement (16) disposé pour une rotation autour de l'axe commun (12a) et pour une rotation par rapport aux premier et second entraînements (12, 24) et espacé axialement du second entraînement (14) ;
un troisième moyen à mâchoires (36) étant mobile de manière axiale depuis une position neutre jusqu'à une position de mise en prise avec un quatrième moyen à mâchoires (30) pour un raccordement positif des entraînements en réponse à un mouvement de mise en prise du premier moyen à mâchoires (36) par une seconde force de déplacement dirigée axialement ;
un troisième organe de frottement (50) étant mobile de manière axiale, en prise par frottement avec un quatrième organe de frottement (26) en réponse au mouvement de mise en prise du troisième moyen à mâchoires (50) pour produire un second couple de synchronisation ;
des troisième et quatrième moyens de blocage (36b, 46a) pour empêcher une mise en prise asynchrone des troisième et quatrième moyens à mâchoires (36, 30) et pour transmettre la seconde force de déplacement aux troisième et quatrième organes de frottement (50, 26) ;
un second moyen de limitation (66d, 38c) produisant une seconde force antagoniste pour diminuer la quantité de la seconde force de déplacement transmise aux troisième et quatrième organes de frottement (50, 26) en réponse au second couple de synchronisation dépassant une seconde quantité prédéterminée.

3. Synchroniseur selon la revendication 1 ou 2, dans lequel :
le premier moyen de limitation (64d, 38d) inclut un moyen élastique (72) pour empêcher la première force antagoniste jusqu'à ce que le premier couple de synchronisation dépasse la quantité prédéterminée.

4. Synchroniseur selon la revendication 1, 2 ou 3, dans lequel :
le premier moyen de limitation (64d, 38b) inclut des première et seconde surfaces (64d, 38b) fonctionnelles lorsqu'elles sont en prise pour produire la première force antagoniste.

5. Synchroniseur selon la revendication 4, dans lequel :
les première et seconde surfaces (64d, 38b) réagissent respectivement entre le premier organe de frottement (48) et le premier entraînement (12) ; et
le moyen élastique (72) empêchent la mise en prise des première et seconde surfaces (64d, 38b) jusqu'à ce que le premier couple de synchronisation dans une direction dépasse la première quantité prédéterminée.

6. Synchroniseur selon la revendication 4 ou 5, dans lequel :
un moyeu (32) est apposé à l'encontre du mouvement de rotation et axial par rapport au premier entraînement (12) et inclut une circonférence externe ayant une pluralité de clavettes externes (38) ;
le premier moyen à mâchoires inclut des clavettes internes (36) s'accouplant, de manière coulissante, avec les clavettes externes ;
un premier segment de support (40) inclut le premier organe de frottement et le second moyen de blocage (44a) ;
le moyeu (32) incluant, en outre, un renfoncement (70) ayant les première et seconde extrémités espacées à part de manière circonférentielle (38b, 38d) avec au moins l'une des extrémités (38b) définissant la seconde surface (38b) ; et
le premier segment de support (40) inclut la première surface (48) apposée à celui-là.

7. Synchroniseur selon la revendication 6, dans lequel :
le premier moyen de limitation (64d, 38b) inclut les troisième et quatrième surfaces (64c, 38d) définies respectivement par le premier segment de support (40) et la seconde extrémité (38d) du renfoncement (70) et le second moyen élastique (74) pour empêcher la mise en prise des troisième et quatrième surfaces (64c, 38d) jusqu'à ce que le premier couple de synchronisation dans une direction opposée à la première direction dépasse la première quantité prédéterminée.

8. Synchroniseur selon la revendication 6 ou 7, dans lequel :
les clavettes internes (36) ont des extrémités qui sont orientées de manière axiale définissant les premiers dispositifs de blocage (36a).

9. Synchroniseur selon la revendication 2 jusqu'à la revendication 7, dans lequel :
le second moyen de limitation (66d, 38c) inclut un moyen élastique (72) pour empêcher la seconde force antagoniste jusqu'à ce que le second couple de synchronisation dans une direction dépasse la seconde quantité prédéterminée.

10. Synchroniseur selon la revendication 2 jusqu'à la revendication 9, dans lequel :
le second moyen de limitation (66d, 38c) inclut les cinquième et sixième surfaces (66d, 38c) fonctionnelles lorsqu'elles sont en prise pour produire la seconde force antagoniste.

11. Synchroniseur selon la revendication 10, dans lequel :
les cinquième et sixième surfaces (66d, 38c) réagissent respectivement entre le troisième organe de frottement (50) et le premier entraînement (12) ; et
le moyen élastique (72) empêche la mise en prise des cinquième et sixième surfaces (66d, 38c) jusqu'à ce que le second couple de synchronisation dépasse la seconde quantité prédéterminée.

12. Synchroniseur selon la revendication 6 jusqu'à la revendication 11, dans lequel:
le troisième moyen à mâchoires (36) inclut des clavettes internes (36) s'accouplant de manière coulissante avec les clavettes externes (38) ;
un segment de support (42) inclut le troisième organe de frottement (50) et les quatrièmes dispositifs de blocage (46a) :
la première extrémité du renfoncement (70) de moyen définit la sixième surface (38c) ; et
le segment de support (42) inclut la cinquième surface (66d) apposée à celui-ci.

13. Synchroniseur selon la revendication 12, dans lequel :
le second moyen de limitation (66d, 38c) inclut les septième et huitième surfaces (66e, 38e) définies respectivement par le segment de support (42) et la seconde extrémité (38e) du renfoncement (70) et le second moyen élastique (74) pour empêcher la mise en prise des septième et huitième surfaces (66e, 38e) jusqu'à ce que le premier couple de synchronisation dans une direction opposée à la première dépasse la première quantité prédéterminée.

14. Synchroniseur selon la revendication 12 ou 13, dans lequel:
les clavettes internes (36) du troisième moyen à mâchoires ont des extrémités qui sont orientées de manière axiale définissant les troisièmes dispositifs de blocage (36b).
